# EUROPÄISCHE PATENTSCHRIFT

(11) **EP 2 547 585 B1**
(45) Veröffentlichungstag und Bekanntmachung des Hinweises auf die Patenterteilung: **02.04.2014**
(21) Anmeldenummer: 11705818.0
(22) Anmeldetag: 23.02.2011
(51) Int. Cl.: B64D 25/00

(54) **VERFAHREN UND SYSTEM ZUR STEUERUNG EINER FLUGZEUGKOMPONENTE BEI EINER WASSERLANDUNG**
METHOD AND SYSTEM FOR CONTROLLING AN AIRCRAFT COMPONENT IN CASE OF A WATER LANDING
METHODE ET SYSTEME DE CONTROLE D'UN COMPOSANT D'UN AERONEF EN CAS D'AMERRISSAGE

(30) Priorität: 19.03.2010 US 315570 P; 19.03.2010 DE 102010012071
(43) Veröffentlichungstag der Anmeldung: 23.01.2013
(73) Patentinhaber: Airbus Operations GmbH, 21129 Hamburg (DE)
(72) Erfinder: BIEGEMANN, Carsten, 21635 Jork (DE); AKIN, Ugur, 22765 Hamburg (DE); BERBACH, Julien, 22303 Hamburg (DE)
(74) Vertreter: Schicker, Silvia
(86) Internationale Anmeldenummer: PCT/EP2011/000884
(87) Internationale Veröffentlichungsnummer: WO 2011/113516

(56) Entgegenhaltungen:
- EP-A1- 1 160 159
- WO-A1-2009/077628
- DATABASE WPI Week 197626 Thomson Scientific, London, GB; AN 1976-F8374X XP002652632, -& SU 450 923 A (BALANDIN YU V) 1. Dezember 1975 (1975-12-01)
- DATABASE WPI Week 200903 Thomson Scientific, London, GB; AN 2009-A69803 XP002652633, -& RU 2 341 415 C1 (TAGANROG AVIATION RES TECH STOCK CO) 20. Dezember 2008 (2008-12-20)
- DATABASE WPI Week 200862 Thomson Scientific, London, GB; AN 2008-K35252 XP002652634, -& JP 2008 203123 A (DOKURITSU GYOSEI HOJIN UCHU KOKU KENKYU) 4. September 2008 (2008-09-04)

## Beschreibung

Die Erfindung betrifft ein Verfahren und ein System zur Steuerung einer Flugzeugkomponente bei einer Wasserlandung eines Flugzeugs.

Bei einer Wasserlandung eines Flugzeugs führt das Eintreten von Wasser in den Innenraum des Flugzeugs zu einer Beschleunigung des Sinkvorgangs des Flugzeugs und verkürzt damit die Evakuierungszeit für die Flugzeugpassagiere und die Flugzeugcrew. Ferner sollte das Eindringen von Wasser in ausgewählte Innenraumbereiche des Flugzeugs, beispielsweise die Passagierkabine und das Cockpit oder in Bereiche, in denen für die Evakuierung des Flugzeugs relevante System angeordnet sind, so lange wie möglich verhindert werden. In modernen Flugzeugen ist es daher üblich, bei einer Wasserlandung, auf ein entsprechendes, eine bevorstehende Wasserlandung anzeigendes Signal hin, alle unterhalb einer Schwimmwasserlinie des Flugzeugs im Rumpf des Flugzeugs ausgebildeten Öffnungen, wie z.B. Ventilöffnungen, Stauluftkanalmündungen oder Luftauslasskanalmündungen zu schließen, um den Eintritt von Wasser in den Innenraum des Flugzeugs durch diese Öffnungen zu verhindern. Das eine bevorstehende Wasserlandung anzeigende Signal wird manuell von den Piloten im Cockpit, beispielsweise per Knopfdruck an alle betroffenen Flugzeugsysteme ausgeben.

Die SU 450 923 A offenbart ein System zur Steuerung des Drucks in der Kabine eines Flugzeugs mit einem Auslassventil, das bei einer Wasserlandung des Flugzeugs geschlossen wird, sobald ein unterhalb der Schwimmwasserlinie des Flugzeugs liegender Druckempfänger dem Wasserdruck ausgesetzt ist.

Aus der RU 2 341 415 C1 ist ein Ventil bekannt, das dazu dient, eine Kabine eines Flugzeugs im Fall einer Wasserlandung, sobald das Flugzeug Wasserkontakt hat, hermetisch abzudichten.

Die EP 1 160 151 A1 beschreibt einen Hubschrauber, der mit aufblasbaren Airbags ausgestattet ist, um den Hubschrauber im Fall einer Wasserlandung an der Wasseroberfläche zu halten. Darüber hinaus ist der Hubschrauber mit aufblasbaren Dichtungen ausgestattet, die die Türen gegen das Eindringen von Wasser abdichten.

Die Erfindung ist auf die Aufgabe gerichtet, ein Verfahren und ein System zur Steuerung einer Flugzeugkomponente bei einer Wasserlandung eines Flugzeugs anzugeben, die die Belastung der Piloten im Fall einer Wasserlandung verringern.

Bei einem erfindungsgemäßen Verfahren zur Steuerung einer Flugzeugkomponente bei einer Wasserlandung eines Flugzeugs wird mindestens ein zum Erkennen einer bevorstehenden Wasserlandung des Flugzeugs geeignetes Signal erfasstund an eine Steuereinheit übermittelt. Die Steuereinheit wertet das Signal anhand mindestens eines vorgegebenen, eine Wasserlandung charakterisierenden Erkennungsmerkmals aus. Aufgrund der von ihr durchgeführten Signalauswertung ist die Steuereinheit dazu in der Lage, zu erkennen, dass eine Wasserlandung des Flugzeugs bevorsteht. Mit anderen Worten, das erfindungsgemäße Steuerungsverfahren beinhaltet eine automatische Erkennung einer bevorstehenden Wasserlandung des Flugzeugs.

Wenn die Steuereinheit anhand des mindestens einen Signals und anhand des mindestens einen Erkennungsmerkmals erkennt, dass eine Wasserlandung des Flugzeugs bevorsteht, wird eine einer Öffnung zugeordnete Verschlussvorrichtung in eine Schließstellung gesteuert. Bei der mittels der Verschlussvorrichtung zu verschließenden Öffnung kann es sich um eine Ventilöffnung, eine Mündung eines Kanals, beispielsweise eines Stauluftkanals oder eines Luftauslasskanals und/oder um eine Türöffnung handeln. Die Öffnung kann eine in einer beliebigen Position angeordnete Öffnung im Rumpf des Flugzeugs sein. Alternativ dazu kann die Öffnung jedoch auch in einem zwei Innenraumbereiche des Flugzeugs voneinander trennenden Bauteil ausgebildet sein. Wesentlich ist lediglich, dass durch das Verschließen der Öffnung bei einer Wasserlandung des Flugzeugs der Eintritt von Wasser in einen Innenraumbereich des Flugzeugs durch die Öffnung verhindert wird. Vorzugsweise wird durch die Steuereinheit eine Verschlussvorrichtung angesteuert, die dazu eingerichtet ist, eine unterhalb einer Schwimmwasserlinie des Flugzeugs angeordnete Öffnung zu verschließen.

Das erfindungsgemäße Steuerungsverfahren ermöglicht somit nicht nur eine automatische Erkennung einer bevorstehenden Wasserlandung des Flugzeugs, sondern auch die automatische Einleitung von Maßnahmen, die bei einer Wasserlandung des Flugzeugs den Eintritt von Wasser in einen ausgewählten Innenraumbereich des Flugzeugs verhindern. Die manuelle Ausgabe eines eine bevorstehende Wasserlandung anzeigenden Signals durch die Piloten ist somit nicht länger erforderlich. Grundsätzlich kann das Steuerungsverfahren darauf beschränkt sein, bei einer Wasserlandung des Flugzeugs lediglich eine einer ausgewählten Öffnung zugeordnete Verschlussvorrichtung in eine Schließstellung zu steuern, wobei die ausgewählte Öffnung beispielsweise eine im Rumpf des Flugzeugs unterhalb der Schwimmwasserlinie angeordnete Öffnung mit einem großen Strömungsquerschnitt sein kann. Alternativ dazu kann das Steuerungsverfahren jedoch auch die Ansteuerung einer Mehrzahl von Verschlussvorrichtungen vorsehen, die einer Mehrzahl von Öffnungen zugeordnet sind. Beispielsweise können im Rahmen des erfindungsgemäßen Steuerungsverfahren alle im Rumpf des Flugzeugs unterhalb der Schwimmwasserlinie ausgebildeten Öffnungen verschlossen werden.

Durch das erfindungsgemäße Steuerungsverfahren kann die Belastung der Piloten im Fall einer Wasserlandung des Flugzeugs verringert werden. Dadurch wird es den Piloten ermöglicht, sich auf den Landungsvorgang selbst zu konzentrieren. Ferner können Pilotenfehler bei der Einschätzung der Betriebssituation des Flugzeugs als eine einer Wasserlandung vorausgehende Betriebssituation und bei der manuellen Ausgabe des eine bevorstehende Wasserlandung anzeigenden Signals sowie unnötige Zeitverzögerungen bei diesen Prozessen ausgeschlossen werden. Das erfindungsgemäße Steuerungsverfahren verbessert somit im Fall einer Wasserlandung die Sicherheit für die sich an Bord des Flugzeugs befindlichen Personen.

Vorzugsweise wird bei dem erfindungsgemäßen Verfahren zur Steuerung einer Flugzeugkomponente bei einer Wasserlandung eines Flugzeugs ferner ein Druckerzeugungssystem des Flugzeugs derart gesteuert, dass ein Druckaufbau in einem im Normalbetrieb des Flugzeugs bedruckten Flugzeugbereich verhindert wird, wenn die Steuereinheit erkennt, dass eine Wasserlandung des Flugzeugs bevorsteht. Das Druckerzeugungssystem kann Teil eines Klimatisierungssystems des Flugzeugs und/oder ein von dem Klimatisierungssystem des Flugzeugs unabhängiges System sein. Die Steuerung des Druckerzeugungssystems durch die Steuereinheit kann eine Begrenzung der Leistung oder das Abschalten des Druckerzeugungssystem vorsehen. Dadurch wird verhindert, dass in einem im Normalbetrieb des Flugzeugs bedruckten Flugzeugbereich Druck aufgebaut wird, der nicht wie im Normalbetrieb des Flugzeugs durch das Öffnen von im Rumpf des Flugzeugs ausgebildeten Luftauslassventilen wie gewünscht gesteuert werden kann, da die Luftauslassventile im Fall einer Wasserlandung des Flugzeugs geschlossen bleiben müssen, um das Eindringen von Wasser in den Innenraum des Flugzeugs durch die Ventile zu verhin-dern.

In einer bevorzugten Ausführungsform des erfindungsgemäßen Verfahrens erkennt die Steuereinheit anhand von mindestens zwei vorgegebenen, eine bevorstehende Wasserlandung des Flugzeugs charakterisierenden Erkennungsmerkmalen, dass eine Wasserlandung des Flugzeugs bevorsteht, wobei sich die mindestens zwei Erkennungsmerkmale voneinander unterscheiden. Durch die Berücksichtigung von mehr als einem Erkennungsmerkmal bei der Einschätzung der aktuellen Betriebssituation des Flugzeugs wird die Sicherheit, mit der eine Betriebssituation des Flugzeugs richtig als eine einer Wasserlandung vorausgehende Betriebssituation erkannt wird, erhöht. Je nach Bedarf können von der Steuereinheit bei der Erkennung, dass eine Wasserlandung des Flugzeugs bevorsteht, zwei, drei, vier oder mehr Erkennungsmerkmale herangezogen werden.

Vorzugsweise ist das bei dem erfindungsgemäßen Verfahren zur Steuerung einer Flugzeugkomponente bei einer Wasserlandung eines Flugzeugs herangezogene Signal ein für die aktuelle Flughöhe des Flugzeugs charakteristisches Signal, ein für den Umgebungsdruck charakteristisches Signal, ein für den Betriebszustand eines Flugzeugsfahrwerks charakteristisches Signal und/oder ein für die Beschaffenheit der Erdoberfläche unterhalb des Flugzeugs charakteristisches Signal. Das für die aktuelle Flughöhe des Flugzeugs charakteristische Signal kann beispielsweise ein Signal vom Höhenmesser des Flugzeugs sein und beispielsweise die geometrische Höhe des Flugzeugs, d.h. den Abstand des Flugzeugs zum Boden angeben. Das für den Umgebungsdruck charakteristische Signal ist vorzugsweise ein für den korrigierten statischen Umgebungsdruck, d.h. den statischen Druck in der Nähe des Flugzeugs, ohne Beeinflussung durch Luftverwirbelungen bzw. Luftbewegungen charakteristisches Signal. Der Umgebungsdruck nimmt mit zunehmender Höhe ab und ist daher ein Maß für die Flughöhe. Der korrigierte statische Umgebungsdruck ermöglicht eine zuverlässige Abschätzung für die Mindestflughöhe des Flugzeugs. Das für den Betriebszustand des Flugzeugfahrwerks charakteristische Signal gibt vorzugsweise an, ob das Fahrwerk eingefahren oder ausgefahren ist und kann ein von einer Fahrwerksteuerung übermitteltes Betriebszustandsignal, aber auch ein von einer optischen Kamera erfasstes Bildsignal sein. Das für die Beschaffenheit der Erdoberfläche unterhalb des Flugzeugs charakteristische Signal kann beispielsweise ein von einer optischen Kamera erfasstes Bildsignal, das Signal eines wasserempfindlichen Radars und/oder das Signal einer Wärmebildkamera sein.

Das vorgegebene, eine Wasserlandung charakterisierende Erkennungsmerkmal kann ein Erkennungsmerkmal für ein Unterschreiten einer vorgegebenen Flughöhe des Flugzeugs, ein Erkennungsmerkmal für ein Überschreiten eines vorgegeben Umgebungsdrucks, ein Erkennungsmerkmal für ein eingefahrenes Flugzeugfahrwerk und/oder ein Erkennungsmerkmal für ein Gewässer unterhalb des Flugzeugs sein. Beispielsweise wird eine gemessene Flughöhe des Flugzeugs als eine eine bevorstehende Wasserlandung charakterisierende Flughöhe erkannt, wenn die gemessene Flughöhe einen vorgegebenen Schwellenwert von beispielweise 2000 Fuß (ca. 610 m) unterschreitet. In ähnlicher Weise wird beispielsweise ein gemessener Umgebungsdruck als ein eine bevorstehende Wasserlandung charakterisierender Umgebungsdruck erkannt, wenn der gemessene Umgebungsdruck einen vorgegebenen Schwellenwert von beispielweise 571 hPa überschreitet, was einer Flughöhe des Flugzeugs von ca. 15000 Fuß (4572 m) entspricht. Die Berücksichtigung des Umgebungsdrucks neben der Flughöhe ermöglicht eine gewisse Redundanz bei der Beurteilung einer Betriebssituation des Flugzeugs als eine einer Wasserlandung vorausgehende Betriebssituation und erhöht damit die Sicherheit, dass eine Betriebssituation des Flugzeugs nicht falsch als eine einer Wasserlandung vorausgehende Betriebssituation erkannt wird.

Bei der Betrachtung des Betriebszustands des Flugzeugfahrwerks kann ein eingefahrenes Fahrwerk, insbesondere im Zusammenhang mit dem Vorliegen weiterer Erkennungsmerkmale, als Anzeichen für eine bevorstehende Wasserlandung des Flugzeugs gewertet werden. Die Erkennung, ob das Fahrwerk eingefahren ist, kann anhand eines von einer Fahrwerksteuerung übermittelten Betriebszustandsignals oder durch entsprechende Auswertung eines von einer optischen Kamera erfassten Bildsignals erfolgen. Für die Auswertung des Bildsignals kann eine geeignete Bilderkennungssoftware zum Einsatz kommen. In ähnlicher Weise kann auch ein von einer optischen Kamera erfasstes Bildsignal, ein Radarsignal und/oder ein Signal einer Wärmebildkamera mittels einer geeigneten Software ausgewertet werden, um zu erkennen, ob sich unterhalb des Flugzeugs ein Gewässer befindet. Falls gewünscht, ist es möglich, anhand lediglich eines geeigneten Signals, beispielsweise eines Bildsignals, zu erkennen, dass das Fahrwerk eingefahren ist und dass sich ein Gewässer unterhalb des Flugzeugs befindet. Die Anzahl an erfassten zum Erkennen einer bevorstehenden Wasserlandung des Flugzeugs geeigneten Signale und die Anzahl der vorgegebenen, eine bevorstehende Wasserlandung des Flugzeugs charakterisierenden Erkennungsmerkmale müssen bei dem erfindungsgemäßen Verfahren daher nicht zwangsläufig gleich sein.

Ein erfindungsgemäßes System zur Steuerung einer Flugzeugkomponente bei einer Wasserlandung eines Flugzeugs umfasst mindestens eine Erfassungseinrichtung, die dazu eingerichtet ist, mindestens ein zum Erkennen einer bevorstehenden Wasserlandung des Flugzeugs geeignetes Signal zu erfassen. Eine Steuereinheit ist dazu eingerichtet, das mindestens eine Signal zu empfangen und anhand mindestens eines vorgegebenen, eine Wasserlandung des Flugzeugs charakterisierenden Erkennungsmerkmals auszuwerten. Ferner ist die Steuereinheit dazu eingerichtet, eine einer Öffnung zugeordneten Verschlussvorrichtung derart zu steuern, dass bei einer Wasserlandung des Flugzeugs der Eintritt von Wasser in einen Innenraumbereich des Flugzeugs durch die Öffnung verhindert wird, wenn die Steuereinheit anhand des mindestens einen Signals und anhand des mindestens einen Erkennungsmerkmals erkennt, dass eine Wasserlandung des Flugzeugs bevorsteht.

In einer bevorzugten Ausführung des Systems zur Steuerung einer Flugzeugkomponente bei einer Wasserlandung eines Flugzeugs ist die Steuereinheit ferner dazu eingerichtet, ein Druckerzeugungs-system des Flugzeugs derart zu steuern, dass ein Druckaufbau in einem im Normalbetrieb des Flugzeugs bedruckten Flugzeugbereich verhindert wird, wenn die Steuereinheit erkennt, dass eine Wasserlandung des Flugzeugs bevorsteht.

Vorzugsweise ist die Steuereinheit ferner dazu eingerichtet, anhand von mindestens zwei vorgegebenen, eine bevorstehende Wasserlandung des Flugzeugs charakterisierenden Erkennungsmerkmalen zu erkennen, dass eine Wasserlandung des Flugzeugs bevorsteht, wobei sich die mindestens zwei Erkennungsmerkmale voneinander unterscheiden.

Das zum Erkennen einer bevorstehenden Wasserlandung des Flugzeugs geeignete Signal kann ein für die aktuelle Flughöhe des Flugzeugs charakteristisches Signal, ein für den korrigierten statischen Umgebungsdruck charakteristisches Signal, ein für den Betriebszustand des Flugzeugfahrwerks charakteristisches Signal und/oder ein für die Beschaffenheit der Erdoberfläche unterhalb des Flugzeugs charakteristisches Signal sein.

Das vorgegebene, eine Wasserlandung des Flugzeugs charakterisierende Erkennungsmerkmal kann ein Erkennungsmerkmal für ein Unterschreiten einer vorgegebenen Flughöhe des Flugzeugs, ein Erkennungsmerkmal für ein Überschreiten eines vorgegebenen korrigierten statischen Umgebungsdrucks, ein Erkennungsmerkmal für ein eingefahrenes Flugzeugfahrwerk und/oder ein Erkennungsmerkmal für ein Gewässer unterhalb des Flugzeugs sein.

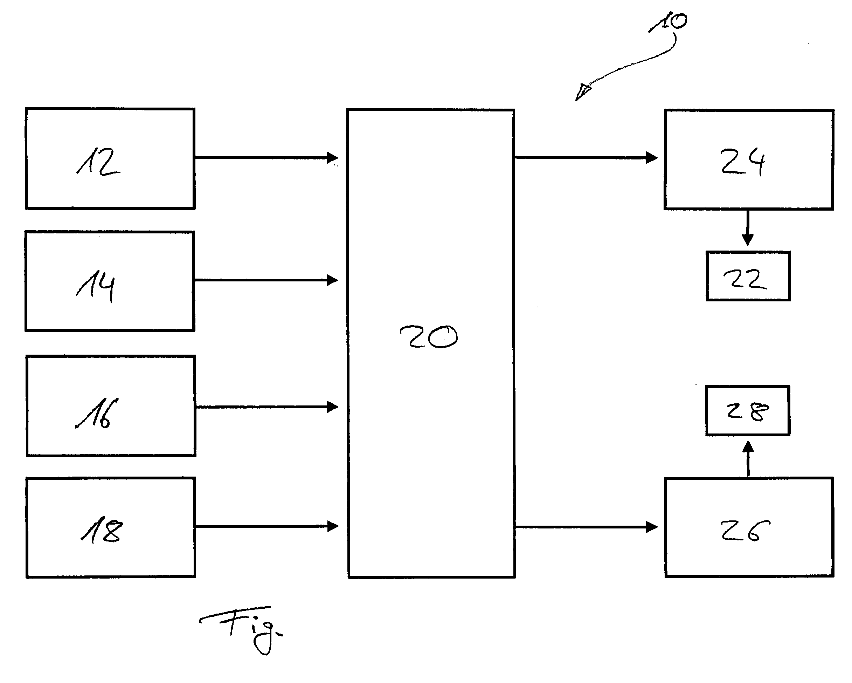

Eine bevorzugte Ausführungsform der Erfindung wird nun anhand der beigefügten Figur näher erläutert, die eine schematische Darstellung eines Systems zur Steuerung einer Flugzeugkomponente bei einer Wasserlandung eines Flugzeugs zeigt.

Ein System 10 zur Steuerung einer Flugzeugkomponente bei einer Wasserlandung eines Flugzeugs umfasst vier Erfassungseinrichtungen 12, 14, 16, 18, die dazu eingerichtet sind, jeweils ein zum Erkennen einer bevorstehenden Wasserlandung des Flugzeugs geeignetes Signal zu erfassen. Eine erste Erfassungseinrichtung 12 ist in Form eines Radarhöhenmessers ausgebildet und dazu eingerichtet, ein für die aktuelle Flughöhe des Flugzeugs charakteristisches Signal zu erfassen und auszugeben. Das für die aktuelle Flughöhe des Flugzeugs charakteristische Signal stellt dabei die geometrische Höhe des Flugzeugs dar und bezeichnet den Abstand des Flugzeugs zum Boden. Eine zweite Erfassungseinrichtung 14 ist in Form einer in ein Air Data Inertial Reference System des Flugzeugs integrierte Druckmessvorrichtung ausgebildet und dazu eingerichtet, ein für den korrigierten statischen Umgebungsdruck charakteristisches Signal zu erfassen und auszugeben. Das für den korrigierten statischen Umgebungsdruck charakteristische Signal bezeichnet den statischen Druck, der in der Nähe des Flugzeugs, ohne Beeinflussung durch Luftverwirbelungen bzw. Luftbewegungen, herrscht. Dieses Signal ermöglicht die verlässliche Abschätzung einer Untergrenze für das Höhenmaß zwischen Flugzeug und der Erdoberfläche. Eine dritte Erfassungseinrichtung 16 ist in Form eines Betriebszustandssensors einer Fahrwerksteuerung des Flugzeugs ausgebildet und dazu eingerichtet, ein für den Betriebszustand des Flugzeugfahrwerks charakteristisches Signal zu erfassen und auszugeben. Das für den Betriebszustand des Flugzeugfahrwerks charakteristische Signal gibt insbesondere an, ob das Fahrwerk ausgefahren oder eingefahren ist. Schließlich ist eine vierte Erfassungseinrichtung 18 in Form einer in ein Terrain Awareness System des Flugzeugs integrierten Kamera ausgebildet und dazu eingerichtet, ein Bildsignal der Umgebung, d.h. der Erdoberfläche unterhalb des Flugzeugs zu erfassen.

Das System 10 zur Steuerung einer Flugzeugkomponente bei einer Wasserlandung eines Flugzeugs umfasst ferner eine Steuereinheit 20, die dazu eingerichtet ist, die von den Erfassungseinrichtungen 12, 14, 16, 18 erfassten Signale zu empfangen und anhand von vier vorgegebenen, eine Wasserlandung des Flugzeugs charakterisierenden Erkennungsmerkmalen auszuwerten. Das erste Erkennungsmerkmal ist das Unterschreiten einer vorgegebenen Flughöhe des Flugzeugs. Die vorgegebene Flughöhe beträgt 2000 Fuß (ca. 610 m). Wenn die Steuereinheit 20 durch Vergleich des von der ersten Erfassungseinrichtung 12 gemessenen Flughöhenwerts mit dem vorgegebenen Flughöhenwert feststellt, dass das Flugzeug die vorgegebene Flughöhe von 2000 Fuß (ca. 610 m) unterschreitet, wertet die Steuereinheit 20 dies als Anzeichen für eine bevorstehende Wasserlandung. Das zweite Erkennungsmerkmal ist das Überschreiten eines vorgegebenen korrigierten statischen Umgebungsdrucks. Der vorgegebene korrigierte statische Umgebungsdruck beträgt 571 hPa, was einer Flughöhe des Flugzeugs von ca. 15000 Fuß (4572 m) entspricht. Wenn die Steuereinheit 20 durch Vergleich des von der zweiten Erfassungseinrichtung 14 gemessenen Umgebungsdruckwerts mit dem vorgegebenen Umgebungsdruckwert feststellt, dass das Flugzeug die Flughöhe von 15000 Fuß (4572 m) unterschreitet, wertet die Steuereinheit 20 dies ebenfalls als Anzeichen für eine bevorstehende Wasserlandung. Die Berücksichtigung des Umgebungsdrucks neben der Flughöhe ermöglicht eine redundante Beurteilung der Flughöhe des Flugzeugs und erhöht damit die Sicherheit, dass eine Betriebssituation des Flugzeugs nicht falsch als eine einer Wasserlandung vorausgehende Betriebssituation erkannt wird.

Das dritte Erkennungsmerkmal ist ein eingefahrenes Flugzeugfahrwerk, d.h. wenn das für den Betriebszustand des Flugzeugfahrwerks charakteristische Signal anzeigt, dass das Fahrwerk eingefahren ist, obwohl das Flugzeug die vorgegebene Flughöhe von 2000 Fuß (ca. 610 m) unterschreitet und obwohl der Vergleich des von der zweiten Erfassungseinrichtung 14 gemessenen Umgebungsdruckwerts mit dem vorgegebenen Umgebungsdruckwert ergibt, dass das Flugzeug die Flughöhe von 15000 Fuß (4572 m) unterschreitet, wertet die Steuereinheit 20 den Betriebszustand "eingefahrenes Fahrwerk" als weiteres Anzeichen für eine bevorstehende Wasserlandung. Schließlich zieht die Steuereinheit 20 die Erkennung eines sich unterhalb des Flugzeugs befindenden Gewässers als viertes Erkennungsmerkmal für eine bevorstehende Wasserlandung heran. Hierzu wird das von der Kamera des Terrain Awareness Systems aufgenommene Bild mit Hilfe einer geeigneten Bilderkennungssoftware ausgewertet. In dem in der Figur gezeigten Ausführungsbeispiel wertet die Steuereinheit 20 einen Betriebszustand des Flugzeugs nur dann als einen einer Wasserlandung vorausgehenden Betriebszustand, wenn die von den Erfassungseinrichtungen 12, 14, 16, 18 erfassten Signale anzeigen, dass alle vier Erkennungsmerkmale erfüllt sind.

In Reaktion auf die automatische Erkennung einer bevorstehenden Wasserlandung des Flugzeugs durch die Steuereinheit 20, sorgt die Steuereinheit 20 ferner für die automatische Einleitung von die Sicherheit bei einer Wasserlandung erhöhenden Maßnahmen. Insbesondere steuert die Steuereinheit 20 alle Verschlussvorrichtungen 24, die im Rumpf des Flugzeugs unterhalb einer Schwimmwasserlinie angeordneten Öffnungen 22, wie z.B. Ventilöffnungen oder Luftkanalmündungen, zugeordnet sind, in eine Schließstellung. Dadurch wird verhindert, dass bei einer Wasserlandung des Flugzeugs durch die Öffnungen 22 Wasser in einen Innenraum des Flugzeugs eintritt. Ferner schaltet die Steuereinheit 20 ein Druckerzeugungssystem 26 ab. Dadurch wird verhindert, dass in im Normalbetrieb des Flugzeugs bedruckten Flugzeugbereichen 28 ein gegenüber dem Umgebungsdruck erhöhter Druck aufgebaut wird, der aufgrund der Tatsache, dass im Rumpf des Flugzeugs angeordnete Luftauslassventile geschlossen sind, nicht wie im Normalbetrieb des Flugzeugs durch Öffnen der Luftauslassventile 22 gesteuert werden kann.

## Patentansprüche

1. Verfahren zur Steuerung einer Flugzeugkomponente bei einer Wasserlandung eines Flugzeugs mit den Schritten:
- Erfassen mindestens eines zum Erkennen einer bevorstehenden Wasserlandung des Flugzeugs geeigneten Signals,
- Übermitteln des mindestens einen Signals an eine Steuereinheit (20),
- Auswerten des mindestens einen Signals anhand mindestens eines vorgegebenen, eine Wasserlandung charakterisierenden Erkennungsmerkmals,
- Steuern einer einer Öffnung (22) zugeordneten Verschlussvorrichtung (24) in eine Schließstellung derart, dass bei einer Wasserlandung des Flugzeugs der Eintritt von Wasser in einen Innenraumbereich des Flugzeugs durch die Öffnung (22) verhindert wird, wenn die Steuereinheit (20) anhand des mindestens einen Signals und anhand des mindestens einen Erkennungsmerkmals erkennt, dass eine Wasserlandung des Flugzeugs bevorsteht.

2. Verfahren nach Anspruch 1,
**gekennzeichnet durch** den weiteren Schritt:
- Steuern eines Druckerzeugungssystems (26) des Flugzeugs derart, dass ein Druckaufbau in einem im Normalbetrieb des Flugzeugs bedruckten Flugzeugbereich verhindert wird, wenn die Steuereinheit (20) erkennt, dass eine Wasserlandung des Flugzeugs bevorsteht.

3. Verfahren nach Anspruch 1 oder 2,
**dadurch gekennzeichnet, dass** die Steuereinheit (20) anhand von mindestens zwei vorgegebenen, eine bevorstehende Wasserlandung des Flugzeugs charakterisierenden Erkennungsmerkmalen erkennt, dass eine Wasserlandung des Flugzeugs bevorsteht, wobei sich die mindestens zwei Erkennungsmerkmale voneinander unterscheiden.

4. Verfahren nach einem der Ansprüche 1 bis 3,
**dadurch gekennzeichnet, dass** das zum Erkennen einer bevorstehenden Wasserlandung des Flugzeugs geeignete Signal ein für die aktuelle Flughöhe des Flugzeugs charakteristisches Signal, ein für den Umgebungsdruck charakteristisches Signal, ein für den Betriebszustand eines Flugzeugfahrwerks charakteristisches Signal und/oder ein für die Beschaffenheit der Erdoberfläche unterhalb des Flugzeugs charakteristisches Signal ist.

5. Verfahren nach einem der Ansprüche 1 bis 4;
**dadurch gekennzeichnet, dass** das vorgegebene, eine Wasserlandung charakterisierende Erkennungsmerkmal ein Erkennungsmerkmal für ein Unterschreiten einer vorgegebenen Flughöhe des Flugzeugs, ein Erkennungsmerkmal für ein Überschreiten eines vorgegebenen Umgebungsdrucks, ein Erkennungsmerkmal für ein eingefahrenes Flugzeugfahrwerk und/oder ein Erkennungsmerkmal für ein Gewässer unterhalb des Flugzeugs ist.

6. System (10) zur Steuerung einer Flugzeugkomponente bei einer Wasserlandung eines Flugzeugs mit:
- mindestens einer Erfassungseinrichtung (12, 14, 16, 18), die dazu eingerichtet ist, mindestens ein zum Erkennen einer bevorstehenden Wasserlandung des Flugzeugs geeignetes Signal zu erfassen,
- einer Steuereinheit (20), die dazu eingerichtet ist, das mindestens eine Signal zu empfangen und anhand mindestens eines vorgegebenen, eine Wasserlandung des Flugzeugs charakterisierenden Erkennungsmerkmals auszuwerten, und die ferner dazu eingerichtet ist, eine einer Öffnung (22) zugeordneten Verschlussvorrichtung (24) derart zu steuern, dass bei einer Wasserlandung des Flugzeugs der Eintritt von Wasser in einen Innenraumbereich des Flugzeugs durch die Öffnung (22) verhindert wird, wenn die Steuereinheit (20) anhand des mindestens einen Signals und anhand des mindestens einen Erkennungsmerkmals erkennt, dass eine Wasserlandung des Flugzeugs bevorsteht.

7. System nach Anspruch 6,
**dadurch gekennzeichnet, dass** die Steuereinheit (20) ferner dazu eingerichtet ist, ein Druckerzeugungssystem (26) des Flugzeugs derart zu steuern, dass ein Druckaufbau in einem im Normalbetrieb des Flugzeugs bedruckten Flugzeugbereich verhindert wird, wenn die Steuereinheit (20) erkennt, dass eine Wasserlandung des Flugzeugs bevorsteht.

8. System nach Anspruch 6 oder 7,
**dadurch gekennzeichnet, dass** die Steuereinheit (20) dazu eingerichtet ist, anhand von mindestens zwei, eine bevorstehende Wasserlandung des Flugzeugs charakterisierenden Erkennungsmerkmalen zu erkennen, dass eine Wasserlandung des Flugzeugs bevorsteht, wobei sich die mindestens zwei Erkennungsmerkmale voneinander unterscheiden.

9. System nach einem der Ansprüche 6 bis 8,
**dadurch gekennzeichnet, dass** das zum Erkennen einer bevorstehenden Wasserlandung des Flugzeugs geeignete Signal ein für die aktuelle Flughöhe des Flugzeugs charakteristisches Signal, ein für den Umgebungsdruck charakteristisches Signal, ein für den Betriebszustand eines Flugzeugfahrwerks charakteristisches Signal und/oder ein für die Beschaffenheit der Erdoberfläche unterhalb des Flugzeugs charakteristisches Signal ist.

10. System nach einem der Ansprüche 6 bis 9,
**dadurch gekennzeichnet, dass** das vorgegebene, eine Wasserlandung charakterisierende Erkennungsmerkmal ein Erkennungsmerkmal für ein Unterschreiten einer vorgegebenen Flughöhe des Flugzeugs, ein Erkennungsmerkmal für ein Überschreiten eines vorgegebenen Umgebungsdrucks, ein Erkennungsmerkmal für ein eingefahrenes Flugzeugfahrwerk und/oder ein Erkennungsmerkmal für ein Gewässers unterhalb des Flugzeugs ist.

## Claims

1. Method of controlling an aircraft component during a water landing of an aircraft, comprising the steps:
- detecting at least one signal suitable for recognizing an imminent water landing of the aircraft,
- transmitting the at least one signal to a control unit (20),
- evaluating the at least one signal on the basis of at least one predetermined recognition characteristic that characterizes a water landing,
- controlling a closing device (24) associated with an opening (22) into a closing position in such a way that in the event of a water landing of the aircraft the entry of water into an interior area of the aircraft through the opening (22) is prevented if the control unit (20) recognizes that a water landing of the aircraft is imminent on the basis of the at least one signal and the at least one recognition characteristic.

2. Method according to claim 1,
**characterized by** the further step:
- controlling a pressure generating system (26) of the aircraft in such a way that a pressure build-up in an aircraft area that is pressurized during normal operation of the aircraft is prevented if the control unit (20) recognizes that a water landing of the aircraft is imminent.

3. Method according to claim 1 or 2,
**characterized in that** the control unit (20) recognizes that a water landing of the aircraft is imminent on the basis of at least two predetermined recognition characteristics that characterize an imminent water landing of the aircraft, wherein the at least two recognition characteristics differ from one another.

4. Method according to one of claims 1 to 3,
**characterized in that** the signal suitable for recognizing an imminent water landing of the aircraft is a signal that is characteristic of the actual cruising altitude of the aircraft, a signal that is characteristic of the ambient pressure, a signal that is characteristic of the operating state of aircraft landing gear and/or a signal that is characteristic of the nature of the earth's surface below the aircraft.

5. Method according to one of claims 1 to 4,
**characterized in that** the predetermined recognition characteristic that characterizes a water landing is a recognition characteristic of a drop below a predetermined cruising altitude of the aircraft, a recognition characteristic of a rise above a predetermined ambient pressure, a recognition characteristic of retracted aircraft landing gear and/or a recognition characteristic of a body of water below the aircraft.

6. System (10) for controlling an aircraft component during a water landing of an aircraft, comprising:
- at least one detection device (12, 14, 16, 18), which is adapted to detect at least one signal suitable for recognizing an imminent water landing of the aircraft,
- a control unit (20), which is adapted to receive the at least one signal and to evaluate said signal on the basis of at least one predetermined recognition characteristic that characterizes a water landing of the aircraft, and which is further adapted to control a closing device (24) associated with an opening (22) in such a way that in the event of a water landing of the aircraft the entry of water into an interior area of the aircraft through the opening (22) is prevented if the control unit (20) recognizes that a water landing of the aircraft is imminent on the basis of the at least one signal and the at least one recognition characteristic.

7. System according to claim 6,
**characterized in that** the control unit (20) is further adapted to control a pressure generating system (26) of the aircraft in such a way that a pressure buildup in an aircraft area that is pressurized during normal operation of the aircraft is prevented if the control unit (20) recognizes that a water landing of the aircraft is imminent.

8. System according to claim 6 or 7,
**characterized in that** the control unit (20) is adapted to recognize that a water landing of the aircraft is imminent on the basis of at least two recognition characteristics that characterize an imminent water landing of the aircraft, wherein the at least two recognition characteristics differ from one another.

9. System according to one of claims 6 to 8,
**characterized in that** the signal suitable for recognizing an imminent water landing of the aircraft is a signal that is characteristic of the actual cruising altitude of the aircraft, a signal that is characteristic of the ambient pressure, a signal that is characteristic of the operating state of aircraft landing gear and/or a signal that is characteristic of the nature of the earth's surface below the aircraft.

10. System according to one of claims 6 to 9,
**characterized in that** the predetermined recognition characteristic that characterizes a water landing is a recognition characteristic of a drop below a predetermined cruising altitude of the aircraft, a recognition characteristic of a rise above a predetermined ambient pressure, a recognition characteristic of retracted aircraft landing gear and/or a recognition characteristic of a body of water below the aircraft.

## Revendications

1. Procédé de commande d'un composant d'aéronef en cas d'amerrissage d'un aéronef, comprenant les étapes suivantes :
- détection d'au moins un signal permettant de reconnaître un amerrissage imminent de l'aéronef,
- transmission dudit au moins un signal à une unité de commande (20),
- évaluation dudit au moins un signal à l'aide d'au moins un critère de reconnaissance prédéfini caractérisant un amerrissage,
- commande d'un dispositif de fermeture (24) associé à une ouverture (22) dans une position de fermeture de façon à empêcher la pénétration d'eau à l'intérieur de l'aéronef à travers l'ouverture (22) en cas d'amerrissage de l'aéronef lorsque l'unité de commande (20) reconnaît, à l'aide dudit au moins un signal et dudit au moins un critère de reconnaissance, qu'un amerrissage de l'aéronef est imminent.

2. Procédé selon la revendication 1,
**caractérisé par** l'étape supplémentaire suivante :
- commande d'un système (26) de génération de pression de l'aéronef de façon à empêcher une augmentation de pression dans une zone pressurisée de l'aéronef lors du fonctionnement normal de l'aéronef lorsque l'unité de commande (20) reconnaît qu'un amerrissage de l'aéronef est imminent.

3. Procédé selon la revendication 1 ou 2,
**caractérisé en ce que** l'unité de commande (20) reconnaît à l'aide d'au moins deux critères de reconnaissance prédéfinis, caractérisant un amerrissage imminent de l'aéronef, qu'un amerrissage de l'aéronef est imminent, lesdits au moins deux critères de reconnaissance étant différents l'un de l'autre.

4. Procédé selon l'une quelconque des revendications 1 à 3,
**caractérisé en ce que** le signal permettant de reconnaître un amerrissage imminent de l'aéronef est un signal caractéristique de l'altitude de vol actuelle de l'aéronef, un signal caractéristique de la pression ambiante, un signal caractéristique de l'état de fonctionnement d'un train d'atterrissage de l'aéronef et/ou un signal caractéristique de la nature de la surface terrestre sous l'aéronef.

5. Procédé selon l'une quelconque des revendications 1 à 4,
**caractérisé en ce que** le critère de reconnaissance prédéfini caractérisant un amerrissage imminent de l'aéronef est un critère de reconnaissance de sous-dépassement d'une altitude de vol prédéfinie de l'aéronef, un critère de reconnaissance d'un dépassement d'une pression ambiante prédéfinie, un critère de reconnaissance d'un train d'atterrissage de l'aéronef rentré et/ou un critère de reconnaissance d'une étendue d'eau sous l'aéronef.

6. Système (10) de commande d'un composant d'aéronef en cas d'amerrissage d'un aéronef, comprenant :
- au moins un dispositif de détection (12, 14, 16, 18) qui est conçu pour détecter au moins signal permettant de reconnaître un amerrissage imminent de l'aéronef,
- une unité de commande (20) qui est conçue pour recevoir ledit au moins un signal et pour l'évaluer à l'aide d'au moins un critère de reconnaissance prédéfini caractérisant un amerrissage de l'aéronef, et qui est en outre conçue pour commander un dispositif de fermeture (24) associé à une ouverture (22) de façon à empêcher la pénétration d'eau à l'intérieur de l'aéronef à travers l'ouverture (22) en cas d'amerrissage de l'aéronef lorsque l'unité de commande (20) reconnaît, à l'aide dudit au moins un signal et dudit au moins un critère de reconnaissance, qu'un amerrissage de l'aéronef est imminent.

7. Système selon la revendication 6,
**caractérisé en ce que** l'unité de commande (20) est en outre conçue pour commander un système (26) de génération de pression de l'aéronef de façon à empêcher une augmentation de pression dans une zone pressurisée de l'aéronef lors du fonctionnement normal de l'aéronef lorsque l'unité de commande (20) reconnaît qu'un amerrissage de l'aéronef est imminent.

8. Système selon la revendication 6 ou 7,
**caractérisé en ce que** l'unité de commande (20) est conçue pour reconnaître à l'aide d'au moins deux critères de reconnaissance caractérisant un amerrissage imminent de l'aéronef, qu'un amerrissage de l'aéronef est imminent, lesdits au moins deux critères de reconnaissance étant différents l'un de l'autre.

9. Système selon l'une quelconque des revendications 6 à 8,
**caractérisé en ce que** le signal permettant de reconnaître un amerrissage imminent de l'aéronef est un signal caractéristique de l'altitude de vol actuelle de l'aéronef, un signal caractéristique de la pression ambiante, un signal caractéristique de l'état de fonctionnement d'un train d'atterrissage de l'aéronef et/ou un signal caractéristique de la nature de la surface terrestre sous l'aéronef.

10. Système selon l'une quelconque des revendications 6 à 9,
**caractérisé en ce que** le critère de reconnaissance prédéfini caractérisant un amerrissage imminent de l'aéronef est un critère de reconnaissance de sous-dépassement d'une altitude de vol prédéfinie de l'aéronef, un critère de reconnaissance d'un dépassement d'une pression ambiante prédéfinie, un critère de reconnaissance d'un train d'atterrissage de l'aéronef rentré et/ou un critère de reconnaissance d'une étendue d'eau sous l'aéronef.
